# EUROPEAN PATENT SPECIFICATION

(11) **EP 2 716 868 B1**
(45) Date of publication and mention of the grant of the patent: **02.09.2020**
(21) Application number: 13187236.8
(22) Date of filing: 03.10.2013
(51) Int. Cl.: F01D 5/18

(54) **Hollow vane with multiple-part insert**
Hohlleitschaufel mit mehreren Pralkuhleinsatz Elementen
Aube statorique avec une cavité comprenant un insert en plusieurs parties.

(30) Priority: 03.10.2012 GB 201217650; 03.10.2012 GB 201217652
(43) Date of publication of application: 09.04.2014
(60) Divisional application: 17184894.8
(73) Proprietor: Rolls-Royce plc, London N1 9FX (GB)
(72) Inventor: Tibbott, Ian, Lichfield, Staffordshire WS14 9XW (GB); Jackson, Dougal, Standon-By-Bridge, Derbyshire DE73 7HT (GB)
(74) Representative: Rolls-Royce plc

(56) References cited:
- WO-A1-2012/084454
- GB-A- 1 530 256
- GB-A- 2 017 229
- US-A- 4 063 851
- US-A- 4 312 624
- US-A- 4 482 295

## Description

### Field of the Invention

The present invention relates to a gas turbine engine vane having a cavity defining shell which receives an insert therein.

### Background of the Invention

The performance of the simple gas turbine engine cycle, whether measured in terms of efficiency or specific output, is improved by increasing the turbine gas temperature. It is therefore desirable to operate the turbine at the highest possible temperature. For any engine cycle compression ratio or bypass ratio, increasing the turbine entry gas temperature always produces more specific thrust (e.g. engine thrust per unit of air mass flow). However, as turbine entry temperatures increase, the life of an uncooled turbine falls, necessitating the development of better materials and the introduction of internal air cooling.

In modern engines, the high pressure (HP) turbine gas temperatures are now much hotter than the melting point of the blade materials used, and in some engine designs the intermediate pressure (IP) and low pressure (LP) turbines are also cooled. During its passage through the turbine, the mean temperature of the gas stream decreases as power is extracted. Therefore the need to cool the static and rotary parts of the engine structure decreases as the gas moves from the HP stage(s) through the IP and LP stages towards the exit nozzle.

Internal convection and external films are the main methods of cooling the aerofoils. HP turbine nozzle guide vanes (NGVs) consume the greatest amount of cooling air on high temperature engines. HP blades typically use about half of the NGV cooling air flow. The IP and LP stages downstream of the HP turbine use progressively less cooling air.

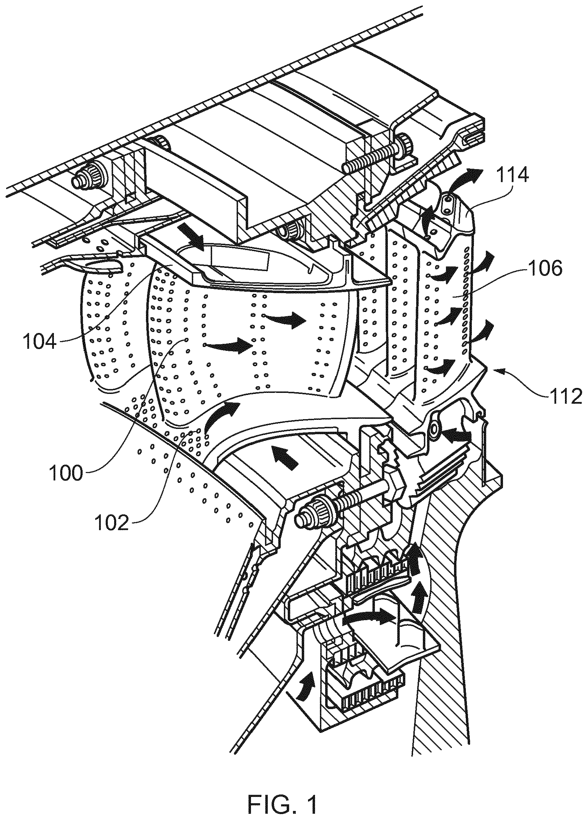

Figure 1 shows an isometric view of a conventional HP stage cooled turbine. Block arrows indicate cooling air flows. The stage has NGVs 100 with inner 102 and outer 104 platforms and HP rotor blades 106 downstream of the NGVs, blade platform 112 and shroud 114. Cooling air can enter NGVs as a single end feed (i.e. in one direction) or a dual end feed (i.e. an inboard and an outboard feed). An aim of the dual feed is to ensure that adequate backflow margin exists at all flight conditions.

The NGVs and HP blades are cooled using high pressure (HP) air from the compressor that has by-passed the combustor and is therefore relatively cool compared to the gas temperature. Typical cooling air temperatures are between 800 and 1000K. Mainstream gas temperatures can be in excess of 2100K.

The cooling air from the compressor that is used to cool the hot turbine components is not used fully to extract work from the turbine. Extracting coolant flow therefore has an adverse effect on the engine operating efficiency. Thus, it is important that the cooling air is used as effectively as possible.

Improvements in Ceramic Matrix Composite (CMC) technology have resulted in its use in HP turbine components becoming more common. CMC can be used to replace metal static components such as high temperature seal segments, and also, more recently NGVs and other aerofoil components.

CMC materials have a high temperature capability and low thermal conductivity. Environmental barrier coatings (EBC) are typically applied to the CMC material. It can be shown that using coated CMC materials such as SiC-SiC, where long multi-strand fibres of silicon carbide are integrated into a silicon carbide matrix, cooling mass flows can be reduced by approximately 40% relative to similar NGV designs made from single crystal nickel alloys.

The introduction of CMCs does not eliminate the need for cooling, although the quantity of coolant required to ensure adequate durability reduces considerably. CMCs may be formed by a laser sintering manufacturing process. However, this process can only be used to produce relatively simple non-detailed structures such as a hollow aerofoil shape with a centrally located divider wall. A composite produced by laser sintering will generally be porous, but the addition of a protective coating can help to protect against environmental attack.

It is known that additional cooling of a hollow turbine engine component can be achieved by providing sheet metal inserts such as tubes or plates which provide impingement cooling by directing cooling air onto the inside walls of the hollow component. The sheet metal inserts may be adapted to provide location supports in the form of pressed dimples.

With engine cycle gas temperatures rising and combustion temperature profiles becoming flatter, as a consequence of the drive to reduce NOx and CO₂ emissions, there is an increasing need to make better use of the cooling air in addition to utilising the advantages provided by the CMC material.

Although the use of CMC material shells with the inserts of the invention is particularly advantageous, the inserts can be used with non-CMC materials, such as traditional metal shells which may be cast as is known in the art.

GB2017229 describes a guide vane having a hollow body externally of aerofoil form. The inner surface of the body is provided with confronting grooves, extending in a direction along the length of the aerofoil form, at a location intermediate the leading and trailing edges of the aerofoil form for receiving two inserts. The first insert comprises two perforated panels situated inside a trailing region of the aerofoil form and defining therewith one or more air passages between the insert and the wall of the body. The first insert has portions which engage in the grooves in the wall of the body, and is provided with confronting grooves extending in a direction along the length of the aerofoil form at a location intermediate the leading and trailing edges of the aerofoil form. The second insert comprises a first panel extending across the void in the body, and has edges which engage in the confronting grooves in the first insert. The second insert has a second panel closing at least part of an end of the void in the body. The first and second inserts include shoulders and a free end which are external to the cavity and which are bent over to retain the insert within cavity.

US4063851 describes an airfoil cooling system having plate-like baffles along the pressure and suction surfaces.

US4482295 describes a hollow stator vane for a turbine is provided with separate forward and aft inserts with the forward insert providing impingement cooling of the vane walls while the aft insert is closely fitted into the vane internal cavity to provide closely defined channel widths between the insert and facing walls of the vane. The aft insert also including means functioning during operation to ensure the maintenance of the closely defined channel widths.

US4312624 describes a cavity of a hollow airfoil divided into separate longitudinally extending pressure and suction side compartments each of which extend from the leading edge to the trailing edge portion of the airfoil for providing cooling air to their respective sides of the airfoil. A a tubular insert provides a dividing wall between the compartments and forms a plenum within the suction side compartment from which cooling air is directed against the suction-side wall through impingement cooling holes in the insert.

WO2012/084454 A1 describes aerofoil-shaped gas turbine components such as gas turbine rotor blades and stator vanes. It also describes impingement tubes used in such components for cooling purposes, adjacent sections of the impingement tube being connected together by a locking means.

GB1530256 describes a cooled blade for a gas turbine engine. The blade comprises an aerofoil portion having a cavity therein, a cooling air entry tube within the cavity, part of the interior surface of the cavity forming a locating surface for the cooling air entry tube, and a separate resilient member trapped between the tube and part of the interior surface of the cavity so that it presses the tube against the locating surface.

EP0392664 describes a blade for a combined cycle turbine in which inserts are used to define conduits for the transportation and recovery of steam for cooling purposes. However, how the blades are constructed with the inserts is not described.

The present invention seeks to provide inserts which may be placed within shells having irregular cavities which may not ordinarily be able to receive an insert.

### Summary of the Invention

The invention provides a gas turbine vane according to the appended claims.

While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

The retention part may include at least two members connected by a hinge portion, wherein the hinge portion provides the biasing force.

The cavity may include an insertion portion into which the insert parts are inserted, and a receiving portion in which at least one of the insert parts is located when the insert is assembled.

The receiving portion may be at least partially obscured by a wall or an internal protuberant feature of the shell when viewed from the insertion aperture. The obstruction of the receiving portion may be provided by a twist along the length of the cavity.

The wall may be the leading or trailing edge of the aerofoil or the pressure or suction surface wall. Alternatively or additionally, the wall may be a dividing wall. The obstruction may be due to a distortion in the shape of the cavity. The cavity may be irregularly shaped along the length thereof. The cavity may be twisted or bent along the length thereof. The twist may be chordal. The cavity may include one or more features around which the insert must be placed. The one or more features may include cooling holes or projections.

The twisting may be due to the aerodynamic profiling of the outer surface of the component. The cavity of the shell may be provided by a wall of the shell. The internal surface of the shell may be smooth. That is, the internal surface of the shell may be devoid of surface features. Such features may include but are not restricted to cooling and turbulating features such as pedestals and trip strips.

The distortion of the cavity may be provided by a widening of the cavity along the length of the cavity. The cavity may include a recess. The recess may provide a receiving portion for part of an insert. The recess may be towards the trailing edge of the blade. The recess may be provided by another part of the multi-part insert.

The maximum width of the assembled multi-part insert may be greater than that of the maximum width of the insertion aperture.

The retention of the assembled insert with the retention part may be for assembly purposes only. As such, the insertion aperture may be partially or completely blocked after the insert is located within the cavity. For example, the insertion aperture may be covered with a cap or plate attached over the insertion aperture.

The retention piece may include two members coupled together at a hinge portion. The hinge portion may be sprung loaded to provide the resilient bias. The hinge portion may be plastically deformed prior to assembly. The hinge portion may be connected to the members so as to provide an angle of separation between the two members. The angle of separation between the members may be greater prior to assembly such that the arms need to be forcibly moved together for insertion into the cavity. Forcing the arms of the retention part together can elastically deform the hinge part such that it is resiliently biased against a wall of a cavity or another one of the insert parts when the retention part is placed in situ.

At least one insert part may made by additive layer manufacturing. At least one insert part may include formations which support the insert within the shell and guide the cooling air around the inner surface of the shell. The shell may be a ceramic matrix composite shell. The formations include projections.

The projections may be fins. The fins may be pin-fins. The formations may form one or more chambers, between the insert and the inner surface of the shell, the or each chamber being configured so that, in use, the chamber receives cooling air from the one or more flow channels, the cooling air pressure being lower in the chamber than in the flow channels. The insert may form a plurality of flow channels in fluid communication with one another to define a multi-pass cooling arrangement.

At least one of the insert parts may predominantly include trip strip formations (460) which lie along the inner surface of the shell when the insert is assembled.

The separate insert part may include one or more support structures for engagement with the insert and the trip strip formations. The strip trip formation and or support structures may be elongate members in the form of bars or rods. The strip trip insert part may have a ladder like construction.

The shell may form an aerofoil and may include a divider wall which divides the shell into a front cavity at a leading edge region of the component and a rear cavity at a trailing edge region of the component; and wherein a multi-part insert is located in the front cavity and or a rear insert located in the rear cavity.

The divider wall may include apertures which provide fluid communication between the front and rear cavity, and at least one part of the insert parts includes a sealing plate to restrict or prevent the flow of cooling air across the divider wall.

The sealing plate may be incorporated on the retaining part. Alternatively or additionally, the sealing plate may be formed by one or more insert parts.

The insert may include: a first wall containing first impingement holes which, in use, jet cooling air onto a first region of the inner surface of the shell; a second wall containing second impingement holes which, in use, jet cooling air onto a second region of the inner surface of the shell; and a fluid pathway formed between the two walls, the pathway recycling the cooling air jetted onto the first region to the inlets of the second impingement holes for jetting onto the second region.

The insert may include heat transfer formations at the first and second regions which support the insert within the shell and which guide the cooling air around the inner surface of the shell.

The shell may include exterior film cooling holes fed by cooling air that has been jetted onto the second region of the inner surface. The insert may include trip strip formations which lie along the inner surface of the shell.

The first and second regions may be located at the suction side of an aerofoil.

The shell includes a divider wall which divides the shell into a front cavity at a leading edge region of the aerofoil and a rear cavity at a trailing edge region of the aerofoil; and wherein the insert is a front insert located in the front cavity, or a rear insert located in the rear cavity. The insert may include a sealing plate to prevent a flow of cooling air across the divider wall. Respective inserts may be in both the front cavity and the rear cavity.

Where the insert is a front insert the pathway may guide the recycled cooling air in an upstream direction towards the leading edge. Where the insert is a rear insert; and the pathway may guide the recycled cooling air in a downstream direction towards the trailing edge.

The insert may define one or more flow channels which, in use, collect cooling air from one or both ends of the aerofoil and distribute the cooling air through the shell, at least a portion of the cooling air being distributed to the inlets of the first impingement holes for jetting onto the first region.

In another aspect there is provided a method of providing an assembled multi-part insert within a shell of a gas turbine vane according to claim 10.

At least one of the insert parts may be a retention part which is oversized in relation to corresponding portion of the cavity in which it is located in use, the oversize being sufficient to require elastic deformation of part during insertion into the cavity to provide the biasing force.

The insert part may have at least two members connected by a hinge portion, wherein the deformation of the insert part requires the two members being brought closer together such that the hinge portion is elastically deformed.

Prior to insertion of the retention part, the retention part may be deformed so as to plastically deform a portion thereof.

Other preferred features include a gas turbine engine component having a shell and an insert located inside the shell, the insert forming one or more flow channels which, in use, receive a flow of cooling air; wherein the insert is made by additive layer manufacturing; and wherein the insert includes formations which support the insert within the shell and guide the cooling air around the inner surface of the shell.

The formations formed as part of an insert made by additive layer manufacturing (ALM) may be intricate features which cannot be formed as part of the shell and which cannot be formed with a high level of dimensional accuracy on inserts produced from sheet metal. By providing ALM inserts with supporting formations, the cooling properties of the component can be greatly improved.

The use of ALM for the production of metal inserts can also be advantageous in that the walls of the insert including the impingement holes can be manufactured in one procedure without requiring a separate tooling step to manufacture the holes. Further, the inserts can be readily modified without a need for expensive re-tooling and the time taken to manufacture inserts can be reduced. Where the insert is metallic, the ALM process can be direct laser deposition (DLD) (also known as direct metal deposition (DMD)).

The shell may be a ceramic matrix composite shell. By providing ALM inserts with supporting formations, the cooling properties of a component having a CMC shell can be greatly improved. More generally, it is possible to add to the benefits provided by a CMC shell, such as its thermal properties, by providing detailed structures that cannot be manufactured as part of the CMC shell.

Alternatively, the shell may be a metal shell, such as single crystal nickel alloy shell.The formations may include fins. These fins may extend to the inner surface of the shell to support the insert within the shell. The fins may be pin-fins which advantageously enhance the heat transfer level by increasing the turbulence of the cooling air flow and providing mixing of the cooling air. The insert may also include impingement holes for jetting cooling air from one or more flow channels onto the inner surface of the shell.

The formations may form one or more chambers between the insert and the inner surface of the shell, the or each chamber being configured so that, in use, the chamber receives cooling air from the one or more flow channels, the cooling air pressure being lower in the chamber than in the flow channels. Each chamber can contain cooling air at a different pressure. The or each chamber can supply film cooling holes formed in the shell, the pressure of cooling air at the film cooling holes being matched to the local external pressure.

The insert may be tubular so that it forms a central flow channel and fits inside the shell in a nested arrangement with formations protruding outwardly from an outer wall of the insert towards the inner surface of the shell. In this way, the chambers can be located around the central flow channel. Another option is for the insert to be a plate which extends from one part of the inner surface of the shell to another part of the inner surface of the shell to form a flow channel on at least one side of the insert.

The insert may form a plurality of flow channels in fluid communication with one another to define a multi-pass cooling arrangement. In such a multi-pass cooling arrangement, the cooling air can flow in opposite directions through successive channels. Integral plates may be located at end walls of the component to create suitable bend geometries between channels.

The insert may include trip strip formations which lie along the inner surface of the shell. These formations can improve heat transfer to the cooling air.

The gas turbine engine component may be an aerofoil. More particularly, the gas turbine engine component may be a nozzle guide vane (NGV) or a rotor blade. However, it is also possible that the gas turbine engine component could be an NGV platform, a shroud segment or a shroud liner.

When the component is an aerofoil, the shell can include a divider wall which divides the shell into a front cavity at a leading edge region of the component and a rear cavity at a trailing edge region of the component. The divider wall can help to prevent the aerofoil structure from rupturing under pressure loads and also can help to prevent unwanted ballooning of the aerofoil shape. The insert may be a front insert located in the front cavity or a rear insert located in the rear cavity. Indeed, the aerofoil may include respective inserts in both the front cavity and the rear cavity.

When the insert is a rear insert, one or more chambers defined by the insert can supply cooling air to trailing edge discharge holes or slots, with the holes or slots receiving cooling air at a pressure matched to the local external pressure.

The insert may include a sealing plate to prevent the flow of cooling air across the divider wall. Such a sealing plate can allow the divider wall to be discontinuous. In preventing the flow of cooling fluid across the divider wall, the sealing plate can help to reduce thermal induced stresses associated with hot external walls and a cold divider.

The insert may be a unitary body, or may be formed from two or more separately insertable insert parts. Forming the insert from a plurality of insert parts can allow the insert to be fitted into a shell which has, for example, a re-entrant cavity or is otherwise configured in such a way as to prevent a unitary body from being inserted.

The insert can include: a first wall containing first impingement holes which, in use, jet cooling air onto a first region of the inner surface of the shell; a second wall containing second impingement holes which, in use, jet cooling air onto a second region of the inner surface of the shell; and a fluid pathway formed between the two walls, the pathway recycling the cooling air jetted onto the first region to the inlets of the second impingement holes for jetting onto the second region.

Advantageously, the insert allows jetted cooling air to be used twice. In this way, film cooling effectiveness and film coverage can be increased for a given quantity of cooling air mass flow.

The shell may be a ceramic matrix composite shell. Alternatively, the shell may be a metal shell, such as single crystal nickel alloy shell.

The insert may be made by additive layer manufacturing (ALM) or by casting. Where the insert is metallic, the ALM process can be direct laser deposition (DLD) (also known as direct metal deposition (DMD)). An insert made by ALM or casting can be produced with a high level of intricacy and with high speed and repeatability. For example, ALM facilitates the production of features such as thin walls and internal cooling holes, as well as internal heat transfer augmentation features like trip-strips, pedestals, pin-fins etc.

The insert may include heat transfer formations at the first and second regions which support the insert within the shell and which guide the cooling air around the inner surface of the shell. In this way, the cooling air can remove more heat from the walls of the shell. In addition, as the insert supports itself, there may be no need for extra support structures which can add to manufacturing time and cost.

The geometry of the heat transfer formations at the first region in particular may be chosen to restrict the flow rate of the cooling air and to increase the pressure drop through the pathway. The heat transfer formations may be pedestals or pin-fins, in which case the flow rate of the cooling air may be controlled by the number of pedestals/pin-fins, their density and their diameter. Additionally or alternatively, the number of the impingement holes and/or the diameter of the impingement holes can be used to control the flow rate of the cooling air.

The shell may include exterior film cooling holes fed by cooling air that has been jetted onto the second region of the inner surface. This further recycling of the cooling air helps to make even more effective use of the air.

The insert may include trip strip formations which lie along the inner surface of the shell.

The gas turbine engine component may be an aerofoil. More particularly, the gas turbine engine component may be a nozzle guide vane (NGV) or a rotor blade. However, it is also possible that the gas turbine engine component can be an NGV platform, a shroud segment or a shroud liner.

Where the component is an aerofoil, the first and second regions may be located at the suction side of the aerofoil.

The shell of the aerofoil may include a divider wall which divides the shell into a front cavity at a leading edge region of the aerofoil and a rear cavity at a trailing edge region of the aerofoil. The insert can then be a front insert located in the front cavity, or a rear insert located in the rear cavity. Indeed, the aerofoil may have respective inserts in both the front cavity and the rear cavity. The divider wall can help to prevent the aerofoil structure from rupturing under pressure loads and also helps to prevent unwanted ballooning of the aerofoil shape. The insert may include a sealing plate to prevent a flow of cooling air across the divider wall. In preventing such a flow, the sealing plate can reduce thermal induced stresses associated with hot external walls and a cold divider.

Where the insert of the aerofoil is a front insert, the pathway may guide the recycled cooling air in an upstream direction towards the leading edge. In this way, for the front cavity, the first region of the inner surface of the shell may be located further away from the leading edge of the aerofoil and the second region of the inner surface of the shell may be located closer to the leading edge. Any exterior film cooling holes fed by cooling air that has been jetted onto the second region may therefore lie at a position close to the leading edge, and can contribute to a cooling film on the suction side of the aerofoil.

Where the insert is a rear aerofoil insert, the pathway may guide the recycled cooling air in a downstream direction towards the trailing edge. In this way, for the rear cavity, the first region of the inner surface of the shell may be located further away from the trailing edge of the aerofoil and the second region of the inner surface of the shell may be located closer to the trailing edge.

The insert may also include a bank of further heat transfer formations, such as pedestals or pin fins, along the inner surface of the shell to guide the cooling air along the inner surface of the shell after it has been jetted onto the second region. In respect of a rear aerofoil insert, the bank of further heat transfer formations preferably guides the recycled cooling air in a downstream direction towards the trailing edge to feed exit holes or slots at the trailing edge.

The aerofoil insert may define one or more flow channels which, in use, collect cooling air from one or both ends of the aerofoil and distribute the cooling air through the shell, at least a portion of the cooling air being distributed to the inlets of the first impingement holes for jetting onto the first region.

The insert may be a unitary body, or may be formed from two or more separately insertable insert parts. Forming the insert from a plurality of insert parts can allow the insert to be fitted into a shell which has, for example, a re-entrant cavity or is otherwise configured in such a way as to prevent a unitary body from being inserted.

Further optional features of the invention are set out below.

### Brief Description of the Drawings

Embodiments of the invention will now be described by way of example with reference to the accompanying drawings in which:
Figure 1 shows an isometric view of a conventional HP stage cooled turbine;
Figure 2 shows a longitudinal cross-section through a ducted fan gas turbine engine;
Figure 3 shows cross sectional views of (a) a ceramic matrix composite shell of a nozzle guide vane found in the circled region labelled R in Figure 2 and (b) front and rear inserts to the shell which are included for understanding the invention only;
Figure 4 shows a cross-sectional view of the nozzle guide vane of Figure 3 with the inserts fitted inside the shell and cooling flows indicated by arrows which is included for understanding the invention only;
Figure 5 shows a cross-sectional view of a second nozzle guide vane which is included for understanding the invention only;
Figure 6 shows a cross-sectional view of the nozzle guide vane of Figure 5 with cooling flows indicated by arrows which is included for understanding the invention only;
Figure 7 shows a cross-sectional view of variant inserts for the nozzle guide vane of Figures 5 and 6 which is included for understanding the invention only;
Figure 8 shows cross-sectional views of (a) a ceramic matrix composite shell of a nozzle guide vane found in the circled region labelled R in Figure 2, and (b) front and rear inserts to the shell which are included for understanding the invention only;
Figure 9 shows a cross-sectional view of the aerofoil of Figure 8 with the inserts fitted inside the shell which is included for understanding the invention only; and
Figures 10a to 12b show various aerofoil embodiments having multi-part inserts according to the invention.

### Detailed Description and Further Optional Features of the Invention

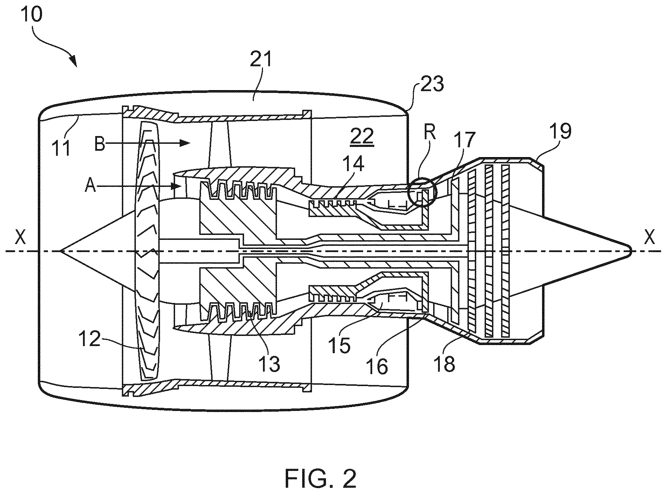

With reference to Figure 2, a ducted fan gas turbine engine incorporating the invention is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

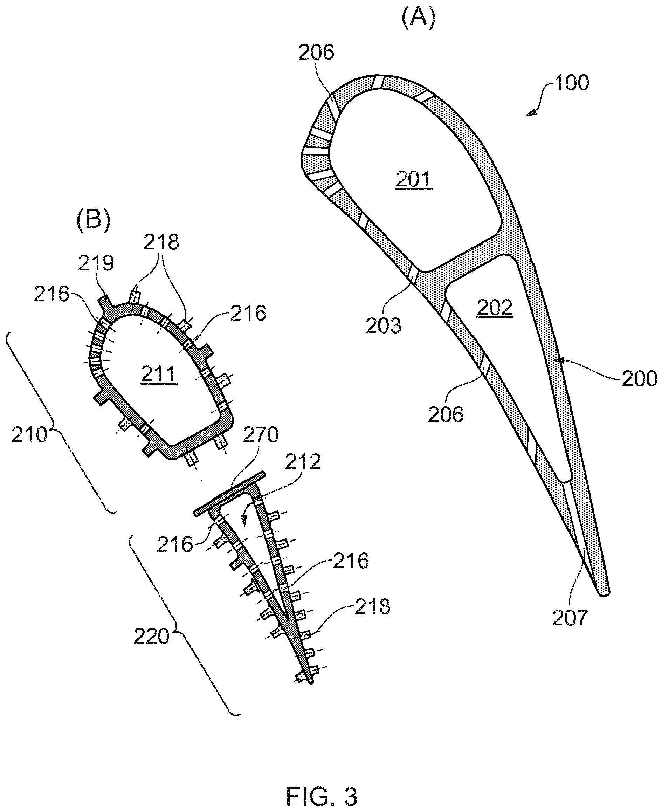

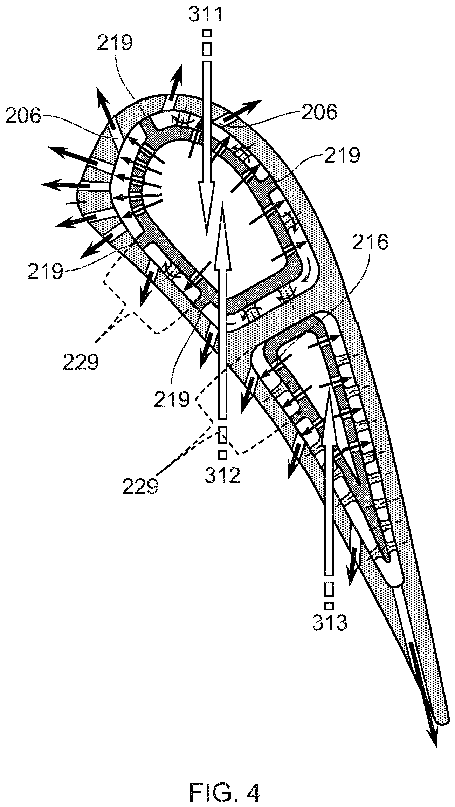

A first example of a component having an insert will be described with reference to Figures 3 and 4. Figure 3 shows cross sectional views of (a) a ceramic matrix composite (CMC) shell of a gas turbine engine component in the form of a nozzle guide vane (NGV) as found in the circled region labelled R in Figure 2, and (b) front and rear inserts to the shell. Figure 4 shows a cross-sectional view of the aerofoil of Figure 3 with the inserts fitted inside the shell and arrows indicating cooling air flows.

The NGV shell includes a divider wall 203 which divides the shell into a front cavity 201 at a leading edge region of the aerofoil and a rear cavity 202 at a trailing edge region of the aerofoil. A front insert 210 made by direct laser deposition (DLD) (a form of additive layer manufacturing) is located inside the front cavity 201 and a rear insert 220 also made by DLD is located inside the rear cavity 202.

The CMC shell includes film cooling holes 206 located at a region of the suction side of the aerofoil closest to the leading edge. Film cooling holes 206 are also located along the pressure side of the aerofoil. A cooling flow outlet 207 is located at the trailing edge of the CMC shell, in fluid communication with the rear cavity, and may take the form of exit holes or slots.

Each of the DLD inserts 210, 220 of Figures 3 and 4 has a tubular shape similar to the shape of the front and rear cavities so that the front insert 210 is located inside the front cavity 201 in a nested arrangement, and the rear insert 220 is located inside the rear cavity 202 in a nested arrangement. Each tubular insert defines a central flow channel 211, 212, and cooling air is bled out from each central flow channel to the inner surface of the shell via impingement holes 216 formed in the walls of the insert.

Each DLD insert 210, 220 includes formations 218, 219 which extend outwards from an outer surface of the insert to an inner surface of the shell to support the insert within the shell and guide cooling air around the inner surface of the shell. The formations include pin-fin formations 218 and chamber-forming formations 219.

The rear insert 220 includes a sealing plate 270 located along the divider wall 203 of the shell to help prevent the flow of cooling air across the divider wall 203.

The flow of cooling air will now be described with reference to Figure 4. Large shaded arrows depict the flow of cooling air into the aerofoil, inboard 311 and outboard 312 flows entering the front cavity 201, and a single inboard flow of cooling air 313 entering the rear cavity 202. Where the flow is a dual feed (an inboard and outboard flow), the insert 210 preferably includes a baffle plate (not shown). The baffle plate reduces differential pressures caused by the dual feed, thereby reducing unwanted 'blow through' effects. The baffle plate can be formed as an integral part of the insert 210, which advantageously reduces the part count and cost, and improves reliability.

The chamber-forming formations 219 form a plurality of chambers 229 between each insert and the inner surface of the shell 200. Each chamber 229 is configured to receive cooling air from a flow channel 211, 212 via impingement holes 216, the pressure of the cooling air being lower in the chambers than in the flow channel. Cooling air from the chambers 229 is used to supply film cooling holes 206. The formations 219 of the front insert of the aerofoil shown in Figure 4 form four chambers between the insert 210 and the inner surface of the shell 200. A first chamber supplies cooling air to film cooling holes 206 on the suction side, a second chamber supplies cooling air to showerhead cooling holes 206 at the leading edge region of the pressure side, and third and fourth chambers supply cooling air to film cooling holes on the pressure side further away from the leading edge.

The number of impingement holes 216 supplying a given chamber and the number of film cooling holes 206 fed by that chamber are selected so that each chamber is maintained at a different pressure. Cooling air can therefore be supplied to the film cooling holes 206 and the film cooling outlet 207 at pressures which match the local external pressure. The front flow channel 211 has an internal pressure level which is controlled to ensure adequate blowing rates through these film cooling holes, while maintaining a safe backflow pressure margin to prevent hot gas ingestion throughout the flight cycle.

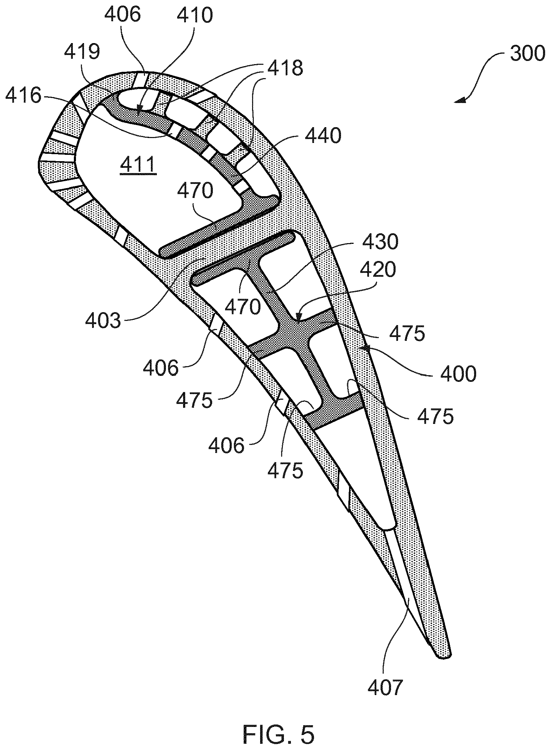

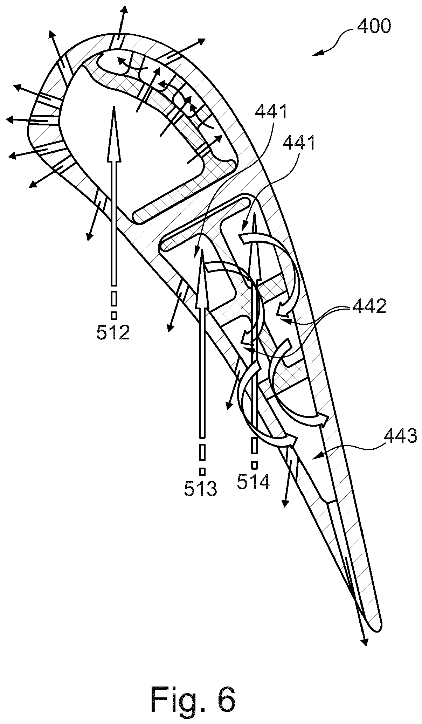

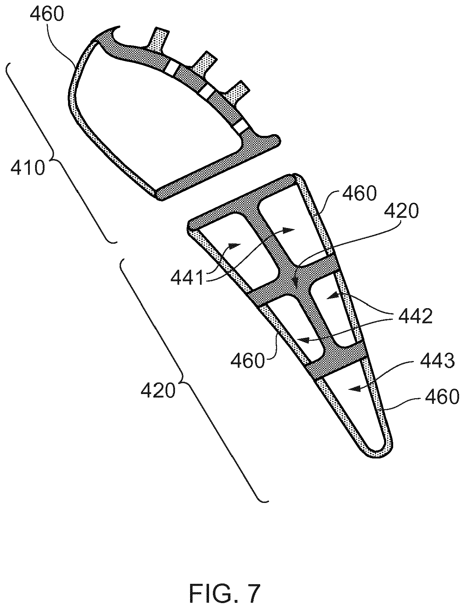

A second example of a component having an insert will be described with reference to Figures 5, 6 and 7. Figure 5 shows a nozzle guide vane 300 according to the second example, Figure 6 shows the cross-sectional view of Figure 5 with arrows indicating cooling air flows, and Figure 7 shows a cross-sectional view of variant inserts for the nozzle guide vane of Figures 5 and 6. The NGV has a CMC shell 400, including a divider wall 403 which divides the shell into a front cavity 201 at a leading edge region of the aerofoil and a rear cavity 202 at a trailing edge region of the aerofoil. A front insert 410 made by DLD is located inside the front cavity 201 and a rear insert 420, also made by DLD, is located inside the rear cavity 202. Each insert 410, 420 includes a sealing plate 470 to prevent the flow of cooling air across the divider wall 403.

The front insert 410 of the aerofoil shown in Figures 5 and 6 has formations, including a plate end 419 and pin-fins 418, which extend from an insert plate 440 to the inner surface of the shell to support the insert within the front cavity of the shell, and thereby define a flow channel 411 at the pressure side of the front cavity between the front insert and the inner surface of the shell, and a chamber at the suction side of the front cavity between the front insert and the inner surface of the shell. The chamber on the suction side receives cooling air from the flow channel 411 via impingement holes 416.

The rear insert 420 of the aerofoil shown in Figures 5 and 6 has formations in the form of sealing walls 475 which extend outwardly from a central insert plate 430, to the inner surface of the shell. There are four sealing walls 475 which, in addition to the sealing plate 470, define a plurality of flow channels 441, 442, 443 in fluid communication with one another to form a multi-pass cooling arrangement.

In Figure 6, large straight arrows 512, 513 and 514 depict flows of cooling air into the aerofoil 400. The multi-pass cooling arrangement includes, in flow series, a pair of parallel first pass chambers 441 (one on the pressure side and one on the suction side) corresponding to a first pass flow channel, a pair of parallel second pass chambers 442 (one on the pressure side and one on the suction side) corresponding to a second pass flow channel and a common third pass chamber 443 corresponding to a third pass flow channel. The third chamber is located at a trailing edge region of the rear cavity and feeds trailing edge discharge holes or slots 407. The first pass chamber 441 on the pressure side supplies film cooling holes 406 on the pressure side of the NGV. Similarly, the second pass chamber 442 on the pressure side supplies film cooling holes 406 on the pressure side of the NGV.

Integral plates at end walls (not shown) create suitable bend geometries to guide cooling air from the first pass chambers 441 to the second pass chambers 442 and from the second pass chambers to the third chamber 443 in order that the chambers operate as the rearward flowing, 3-pass cooling arrangement shown by the curved arrows.

Figure 7 shows variant front and rear inserts similar to those of Figures 5 and 6 but having additional trip strip formations 460 which lie along the inner surface of the shell. The trip strip formations are ladder-like in construction having a pair elongate parallel rails which provide support for a linear array of equally spaced trip strips or bars which run therebetween. The trip strips are set at a compound angle to the rails, Trip strips are known in the art and can locally enhance heat transfer to the cooling air.

Although not shown in the above Figures, formations defining a contra-flow cooling system can be incorporated into an insert, as an alternative or an addition to the cooling structures described above.

Any holes 216, 416 in the insert can be formed during the DLD process so there is no need for subsequent machining of the inserts.

In addition, the DLD process facilitates modification and development of the insert design during the manufacturing process as no tooling changes are required. For example, features such as formations 218, 219, 418, 419, 460, 475 may be altered slightly between the manufacture of different aerofoils 100, 400 of a single engine 10 depending on the position of the respective aerofoils within the engine to give a relative increase or decrease in the cooling mass flow of the aerofoil.

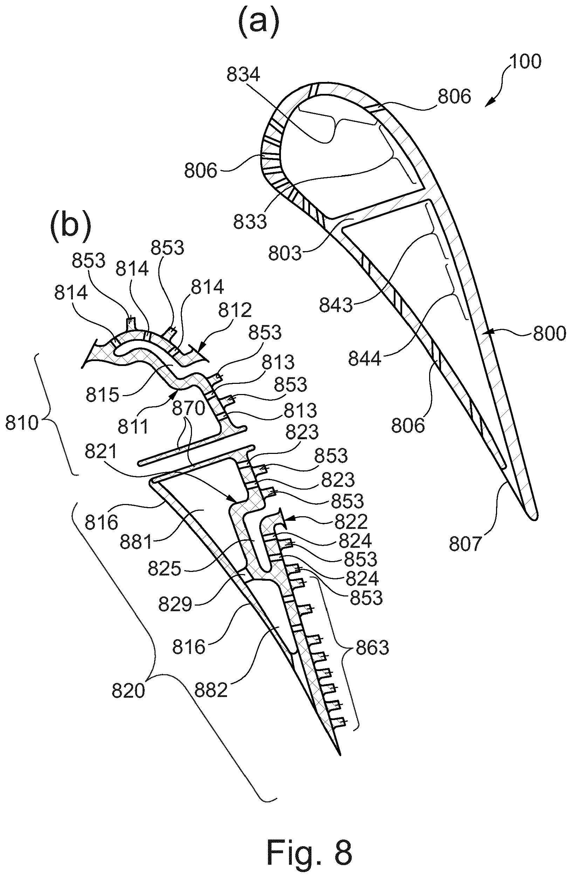

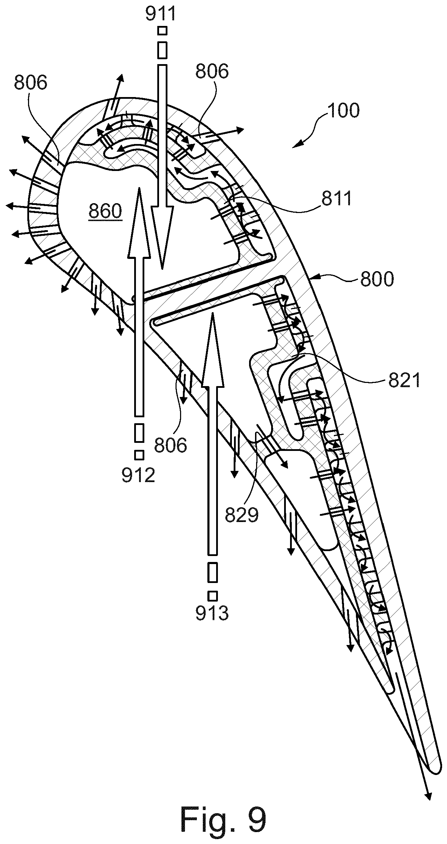

Figure 8 shows cross-sectional views of (a) a ceramic matrix composite (CMC) shell 800 of a gas turbine engine component 100 in the form of a nozzle guide vane (NGV) found in the circled region labelled R in Figure 2, and (b) front 810 and rear 820 inserts to the shell. Figure 9 shows a cross-sectional view of the aerofoil of Figure 8 with the inserts fitted inside the shell and arrows indicating cooling air flows.

The shell 800 includes a divider wall 803 which divides the shell into a front cavity at a leading edge region of the aerofoil and a rear cavity at a trailing edge region of the aerofoil. The front insert 810 is located inside the front cavity and the rear insert 820 is located inside the rear cavity.

The CMC shell 800 includes exterior film cooling holes 806 located at the region of the suction side of the aerofoil closest to the leading edge. More exterior film cooling holes 806 are located along the pressure side of the aerofoil. The CMC shell 800 also includes exit holes or slots 807 at its trailing edge.

Each of the front and rear inserts includes a first wall 811, 821 having first impingement holes 813, 823 formed therein and a second wall 812, 822 having second impingement holes 814, 824 formed therein. For each insert, a fluid pathway 815, 825 is formed between the first wall 811, 821 and the second wall 812, 822.

The first impingement holes 813, 823 lie opposite a first region of the inner surface of the shell and the second impingement holes 814, 824 lie opposite a second region, 844 of the inner surface of the shell. The first and second regions of the aerofoil of Figures 3 and 4 are both located at the suction side of the aerofoil. For each insert, the fluid pathway is formed between the first region and the inlets of the second impingement holes 814, 824 to recycle cooling air which has been jetted onto the first region for jetting onto the second region.

The fluid pathway 815 of the front insert guides recycled cooling air in an upstream direction towards the leading edge so that, for the front cavity, the first region is located further away from the leading edge of the aerofoil and the second region is located closer to the leading edge of the aerofoil. The fluid pathway 825 of the rear insert guides recycled cooling air in a downstream direction so that, for the rear cavity, the first region is located furthest away from the trailing edge of the aerofoil and the second region is located closest to the trailing edge 807 of the aerofoil.

Heat transfer formations 853 are located at the first region and the second region. The heat transfer formations shown in Figures 3(b) and 4 are pin-fins.

In addition to the first wall 821 and second wall 822, the rear insert 820 shown in Figures 3(b) and 4 includes a bank of pin-fins 863 which extend along the inside surface of the shell from the second region to the trailing edge. The rear insert also defines a plurality of chambers 881, 882 at the pressure side of the rear cavity. The chambers are interconnected via internal passageways 829 so that they are in fluid communication with each other. Two chambers 881, 882 are shown in the rear insert of the aerofoil of Figure 3(b) and 4.

Each insert 810, 820 includes a sealing plate 870 which lies along the divider wall 803 of the CMC shell 800 to prevent a flow of cold air across the divider wall. The rear insert 820 also includes trip strip formations 816 which lie along the inner surface of the shell at the pressure side of the cavity to improve heat transfer to the cooling air at this location.

The flow of cooling air will now be described with reference to Figure 9. Large shaded arrows depict the flow of cooling air into the aerofoil: inboard 911 and outboard 912 flows entering the front cavity, and a single inboard flow of cooling air 913 entering the rear cavity 802. Where the flow is a dual feed (an inboard and an outboard flow), the insert preferably includes a baffle plate (not shown). The baffle plate reduces differential pressures caused by the dual feed, therefore reducing unwanted 'blow through' effects. The baffle plate can be formed as an integral part of the insert which advantageously reduces the part count and cost and improves reliability.

In the front cavity, the first wall 811 defines a front flow channel 860 at the pressure side of the cavity. Cooling air is distributed from this front flow channel to the inlets of the first impingement holes 813 for jetting onto the first region. The front flow channel also supplies cooling air at a high pressure to film cooling holes 806 on the pressure side in the form of a leading edge showerhead cooling head arrangement. The front flow channel has an internal pressure level which is controlled to ensure adequate blowing rates through these cooling holes, while maintaining a safe backflow pressure margin to prevent hot gas ingestion throughout the flight cycle. Cooling air which has been recycled and jetted onto the second region 834 will have a reduced pressure compared to the cooling air supplied directly by the front flow channel and can therefore be used to feed exterior film cooling holes 806 on the suction side.

In the rear cavity 802, the plurality of chambers 881, 882 on the pressure side form a plurality of rear flow channels. Cooling air enters the first chamber 881 and is distributed therefrom to the inlets of the first impingement holes 823 for jetting onto the first region. This first chamber also supplies cooling at a high pressure to exterior film cooling holes 806 on the pressure side of the aerofoil, as well as supplying cooling air to the second chamber 882 via internal passageways 829. The second chamber supplies cooling air to the bed of pin-fins 863 as well as to further exterior film cooling holes 806 on the pressure side. Both chambers have internal pressure levels which are controlled to ensure adequate blowing rates through their cooling holes, while maintaining a safe backflow pressure margin to prevent hot gas ingestion throughout the flight cycle.

The CMC shell may be SiC-SiC and a protective coating may be applied to the outside and/or inside surfaces of the shell 800 to prevent environmental attack. The inserts 810, 820 may be cast (e.g. using the lost wax process) and then machined (e.g. for hole drilling), or may be made using additive layer manufacturing such as direct laser deposition (also known as direct metal deposition). Additive layer manufacturing, and particularly direct laser deposition, enables all of the detailed features of the inserts to be manufactured in one procedure, including the impingement holes 813, 814, 823, 824. Further, it allows cooling schemes to be easily changed, without the need for re-tooling.

The gas turbine component of the present invention can be an NGV aerofoil, as described in detail in above, but can be any other gas turbine aerofoil, including a rotor blade. The gas turbine component may alternatively be an NGV platform, a shroud segment, or a shroud liner.

The inserts described above can be used instead of, or in combination with, sheet metal inserts.

Instead of forming each insert as a unitary body, as shown in Figures 3 to 9, another option is to form the inserts from two or more insert parts. This allows the inserts to be fitted into cavities where a receiving portion in which part of the insert would ideally be located is obstructed in some way such that a complete insert cannot be directly inserted. The obstruction in question may be provided by a wall of the cavity or by a protuberant feature which extends from one or between two walls of the cavity. An obstructed portion may be as viewed from outside the shell through an insertion aperture, or by a part of the insert having to enter the cavity along a first trajectory before being located in a receiving portion along a second trajectory which is different to the first trajectory. For example, an elongate insert part having a longitudinal axis may be inserted into the cavity with an axially extending trajectory, before being pushed laterally into a recess or an otherwise obscured portion of the cavity.

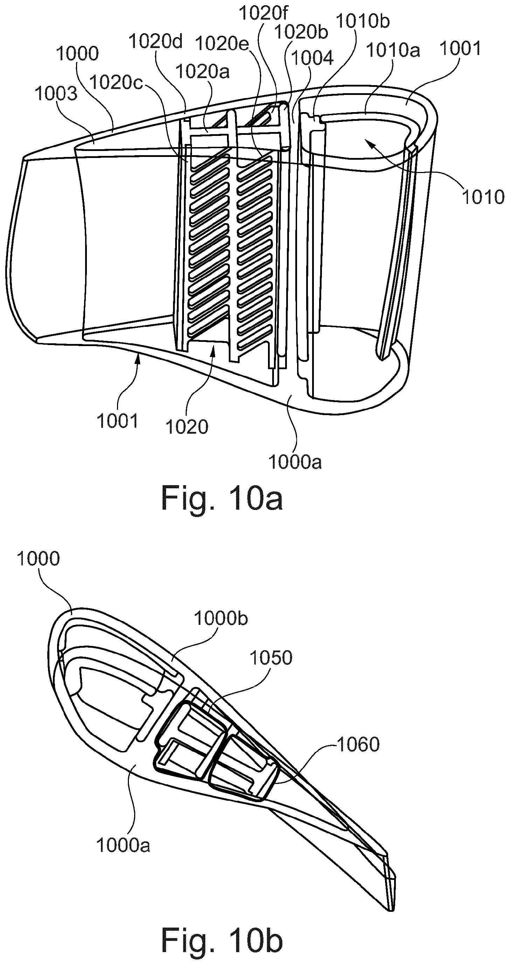

Figures 10a, and 10b show a perspective view of an aerofoil having a front insert 1010 which is a variant of the front insert of Figures 5 and 6, and a rear insert 1020 which is a variant of the rear insert of Figure 7, the CMC shell 1000 being drawn as a transparent body.

Thus, in Figures 10a and 10b there is shown an aerofoil in the form of a vane similar to the NGV shown in Figure 1. The aerofoil includes an elongate shell 1000 having internal front 1001 and rear 1003 cavities. The outer surface of the shell has a predetermined aerodynamic shape suitable for use as an NGV. As such, the aerofoil is distorted from a straight radially extending form and includes a chordal twist along its length. This distortion can be best seen in Figure 10b where the first end 1000a and second end 1000b of the aerofoil are angularly offset from each other when viewed approximately along the longitudinal axis of the aerofoil 1000. This means that the front 1001 and rear cavities which extends along the radial axis of the interior of the aerofoil 1000 have an irregular shape with obstructed portions when viewed from the first end along the longitudinal axis of the shell 1000.

It will be appreciated that the distortion of the cavities is also affected by the internal profile of the shell walls which may be varied but will typically be determined by the weight and mechanical and thermal requirements of the aerofoil rather than the fit of an insert. In the described example, the walls of the shell have substantially uniform thickness.

The front cavity 1001 has a multi-part insert 1010 located therein, which, in the described example, is made up from two separate insert parts 1010a,b assembled in an abutting relation to one another so as to provide the multi-part insert 1010. The rear cavity 1003 also includes a multi-part insert 1020 having multiple separate insert parts 1020a-f. The rear cavity insert 1020 is made up from two main body parts 1020a,b and several trip-strip insert parts 1020c-f which abut and engage the main body portions 1020b of the rear insert 1020, and also the wall of the shell 1000. Thus, the front insert 1010 is a multi-part insert formed from two insert parts 1010a,b and the rear insert 1020 is formed from six insert parts 1020a-f. In each cavity, the last insert part to be installed locks the completed insert in place and ensures a tight fit between the insert and the shell 1000 while accommodating manufacturing tolerances.

To construct the vane with the assembled inserts 1010, 1020, the insert parts 1010a,b, 1020a-f, are placed within the respective cavities via an insertion aperture 1050. The insertion aperture 1050 may be any suitable entrance to the cavity and may be covered and optionally sealed after the inserts 1010, 1020 have been correctly located within the shell 1000. In the described example, the insertion aperture 1050 is provided by the open end of the aerofoil and is as large as can be accommodated by the walls of the shell 1000. It will be appreciated that some constructions of the component, particularly one which is cast for example, may only include a partial opening in the end of the aerofoil. Further, the insertion aperture may be defined by the walls of the shell, or a particular portion or zone of a larger opening.

Although the insertion aperture 1050 of the rear cavity 1003 is as large as can be accommodated, the irregular shape of the rear cavity 1003 means that the insertion of the assembled or unitary insert 1010, 1020 into the cavity 1020 would not be possible. This is because an insert which is shaped to match and abut the internal walls of the cavity may be too large in parts to fit through the insertion aperture 1050. Alternatively, the curvature or twist of the insert may prevent it from being inserted along the length of the cavity. Further, there may be features or recesses within the cavity which the insert must either go around or be placed within when being inserted. Thus, although the use of prior art inserts has provided some benefits, applications have been limited due to the restrictions placed on the inserts.

Providing a multi-part insert allows a first insert part to be loaded into the cavity via an insertion aperture and subsequently located into a receiving portion of the cavity. Thereafter, the second insert part, or retaining part, is passed into the cavity and engaged with the first insert part in an abutting manner. The retaining part may provide a biasing force which acts to urge the first insert part against a wall of the cavity so as to retain it there, or may be manufactured to have an interference fit with the first insert part so as to provide chock. Thus, there is provided an assembled insert within the cavity which cannot be withdrawn from the insertion aperture (or inserted if assembled outside of the shell), but which can be located against the wall of the shell.

In some embodiments, the resilient part may be the first or an intermediate part loaded into the cavity. In this instance, the loading of the resilient part will occur upon insertion of the last part which will act to put the resilient part in a stressed condition.

In the described example of Figures 10a and 10b, a receiving portion 1060 can be taken to the rearmost portion of the rear cavity 1003 in which the first insert part 1010a is located. The insertion aperture 1050 can be taken to be at the first end 1000b of the aerofoil toward the divider wall 1004. Thus, the first insert part 1020a is inserted into the rear cavity 1003 through the insertion aperture 1050 which is located at the wider end of the open ended aerofoil towards the divider wall 1004 and with a trajectory which is coincidental with the plane of the divider wall 1004. Once in place, the first insert part 1020a can be moved toward the rear of the cavity until the distal ends of partitioning walls abut the walls of the cavity. It will be appreciated that the trip strip formations 1020c and 1020d can be mated to the first insert part before or after the insertion depending on the particular design, but it is envisaged that they are mated to the first main body insert part 1020a prior to being loaded into the rear cavity 1003. Next, the second main body insert part 1020b and third trip strip 1020e can be placed within the rear cavity 1003 via the insertion aperture 1050 and pushed home to provide a chock for retaining the first insert part 1020a in place. The final insert part is the fourth trip strip 1020f formation which is slid between a free end of a web of the first main insert part 1020a, and a shoulder which protrudes into the rear cavity 1003 along the length of the divider wall 1004 where the divider wall meets the shell wall.

It will be noted from Figure 10b, that the shape of the rear cavity 1003 would prevent the insertion of the assembled insert 1020 into the cavity from the open end of the vane due to the variance in amount of the chordal twist required between the front and rear parts of the assembled insert.

The two insert parts 1010a,b of the front cavity 1001 include a curved member 1010a which sealably contacts the interior of the leading edge of the aerofoil and extends around the suction side toward the divider wall 1004. The second insert part 1010b is in the form of a sealing plate 1014 which sealably abuts the divider wall 1004. The sealing plate 1014 includes a short wall along its length which includes a rebate for receiving the corresponding free end of the first insert part 1010a.

The first insert part 1010a is made to be slightly flatter than required when in situ such that the free end is closer to the divider wall 1004 and inserting the second insert part 1010b urges the first part 1010a towards the leading edge so as to provide the biasing force for retaining the assembled insert 1010 in place.

In order to provide a correct fit, the insert parts 1010a,b are arranged to be held in an abutting relation with a resilient bias provided by one of the insert parts. The resilient bias in the case of the front cavity is provided by the fore insert part 1010a which is inserted after the sealing plate which is described above. The fore insert part may be oversized slightly with respect to the space in which it is designed to accommodate such that it must elastically deform during insertion.

The elastic deformation is such that the part is sufficiently stressed so as to provide the resilient bias between a wall of the cavity and sealing plate. Alternatively, the insert part may be made so as to be partly collapsible or compressible so that the shape of the part is altered to allow it to be inserted. In order to provide the collapsibility and compressibility, the insert part may be made to size for the cavity before being plastically deformed prior to insertion of the part.

The insert parts can incorporate rebates or other features to allow them to be secured in an abutting relation and to provide opposing surfaces for the retention of the parts via the resilient bias. Hence, as seen in Figure 10b, the sealing plate insert part 1010b in the front cavity 1001 and the free ends of the first and second main body parts in the rear cavity 1003 include rebates for receiving corresponding parts of abutting insert parts. Further, the rails of trip-strip insert parts 1020c-f include protuberant lips which engage with corresponding rebates in the main body portions.

It will be noted that the shell is constructed from a CMC material and as such has smooth outer and inner walls, principally due to the difficulties of forming discrete features in a CMC material. However, this may not always be the case, and the inserts are applicable to other non-CMC constructed shells.

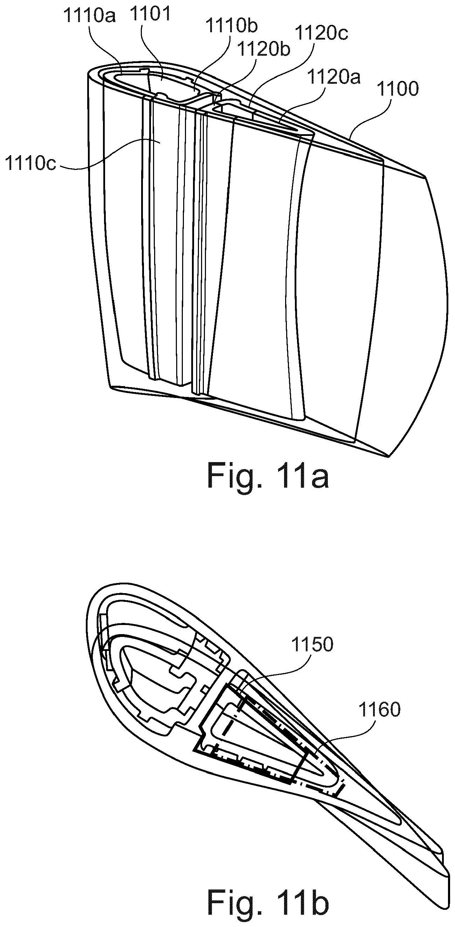

Figures 11a and 11b provide another example in which the rear insert comprises three insert parts 1120 a-c. The first insert part 1120b is V-shaped part having two plate-like members and which are joined at a hinged portion. The free ends of the members (or arms) are tapered from the first end to the second end so as to provide a smaller sectional area at the first end so that it can be manoeuvred more readily into the insertion aperture 1150, and to provide a generally wedge shaped insert part. The second 1120b and third 1120c insert parts join along a mid-line of the sealing plate and form a wedge shaped part in unison which provides a chock for the first part 1120a when the insert parts are assembled into a complete insert. It will be appreciated that the second and third parts are inserted from the opposite end of the cavity through a second insertion aperture 1150.

The V-shaped first insert part 1120a is fabricated such that the angle between the arms is greater than angle between the corresponding portions of the rear cavity. Thus, to insert the part, the arms are forceably moved together so as to elastically stress the hinge portion as it is passed through the insertion aperture. Once inside the cavity, the insert part can be pushed into the receiving portion 1160 with the resilient bias of the arms retaining the part in place.

The front cavity multi-part insert includes three parts 1110a-c. Here, the first insert part 1110a extends from the divider wall toward the leading edge against the pressure surface of the front cavity 1101. The second part 1110b abuts the free end of the first insert part 1110a which is local to the leading edge and extends around the suction surface toward the suction surface. The third insert 1110c is generally L shaped with rebates provided on the free ends of long and short members. The rebates provide a flange which resides on the inside of the free ends of the corresponding ends of the first and second insert parts. The arms are joined at a hinge portion.

The first 1110a and second 1110b insert parts are made to fit in a neutral or stress-free state within the front cavity 1101 whilst abutting the walls of the shell 1100. The third L-shaped insert part is fabricated to have a larger angle than required such that the hinge portion elastically deformed upon insertion so as to provide a restoring force to bias against the free ends of the first and second insert parts against the wall of the cavity via the rebated portions.

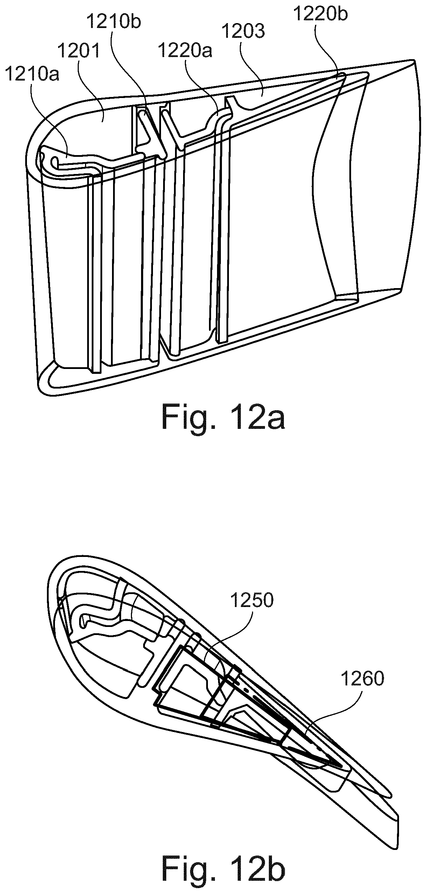

A further example is shown in Figures 12a and 12b which corresponds to the component described in Figures 8 and 9 above, but with multiple insert parts in the front 1201 and rear cavities 1203. Hence, the front and rear inserts each include two insert parts 1210a,b, 1220a,b, having similar features to those described above in relation to Figures 10a to 11b. In this instance, the front cavity 1201 has a first insert part 1210a which is inserted first and provides the resilient bias once the sealing part is inserted. The rear cavity 1203 has a first insert part 1220a which is inserted into the rear cavity via the insertion aperture 1250 along a first trajectory before being pushed rearward into the trailing edge which it is located in its corresponding receiving portion 1260. The second insert 1220b provides the sealing plate and a portion of wall which defines a cooling chamber with the cavity wall. The wall is connected to the sealing plate via a hinge portion which provides the resilient bias for retaining the first insert part in place.

In addition to the above, it is possible in some embodiments that multiple insert parts can be fitted inside one another so that a single shell cavity includes an insert formed from two or more nested insert parts. Each insert shown in Figures 3 and 4 seals its cavity, as well as providing formations to support the insert and guide cooling air around the inner surface of the shell. If two nested insert parts are used in a cavity, the outer of the two insert parts can provide the formations, and the inner of the two insert parts can be configured to balloon under the pressure of the inboard and/or outboard flows of cooling air to provide a sealing load.

While the invention has been described in conjunction with the exemplary embodiments described above, many modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A gas turbine engine vane (100), comprising
a Ceramic Matrix Composite shell (1000), and a divider wall (1004) which divides the shell into a front cavity (1001) at a leading edge region of the vane, and a rear cavity (1003) at a trailing edge region of the vane; and wherein a multi-part insert (1010) is located in the front cavity and a second multi-part insert located in the rear cavity, wherein the multi-part insert comprises multiple separate parts (1010a,b) assembled in an abutting relation with one another within the cavity to provide the multi-part insert, the multiple separate parts being separately insertable into the cavity;
wherein the assembled multi-part insert includes at least one retention part (1010b) and a fore insert part (1010a), the retention part engaging with the divider wall of the cavity and at least the fore insert part so as to retain the assembled multi-part insert within the cavity;
the fore insert part of the front cavity including a curved member which sealably contacts the interior of the leading edge of the vane and extends around the suction side toward the divider wall, the at least one retention part being in the form of a sealing plate which sealably abuts the divider wall;
and, wherein the retention part is configured to provide an interference fit with at least the fore insert part and or a wall of the cavity and wherein the retention part provides a resilient bias which acts to urge the retention part or another insert part against one or more walls of the shell.

2. The gas turbine engine vane as claimed in claim 1, wherein the retention part includes at least two members connected by a hinge portion, wherein the hinge portion provides the biasing force.

3. The gas turbine engine vane as claimed in claim 1 or claim 2, wherein the cavity includes an insertion portion (1050) into which the insert parts are inserted, and a receiving portion (1060) in which at least one of the insert parts is located when the multi-part insert is assembled.

4. The gas turbine engine vane as claimed in any preceding claim, wherein the multi-part insert includes:
a first wall containing first impingement holes which, in use, jet cooling air onto a first region of the inner surface of the shell;
a second wall containing second impingement holes which, in use, jet cooling air onto a second region of the inner surface of the shell; and
a fluid pathway formed between the two walls, the pathway recycling the cooling air jetted onto the first region to the inlets of the second impingement holes for jetting onto the second region.

5. The gas turbine engine vane as claimed in claim 4, wherein the multi-part insert includes heat transfer formations at the first and second regions which support the multi-part insert within the shell and which guide the cooling air around the inner surface of the shell.

6. The gas turbine engine vane as claimed in claim 4 or claim 5, wherein the shell includes exterior film cooling holes fed by cooling air that has been jetted onto the second region of the inner surface.

7. The gas turbine engine vane as claimed in any preceding claim, wherein the multi-part insert includes trip strip formations which lie along the inner surface of the shell.

8. The gas turbine engine vane as claimed in any one of claims 4 to 7, when dependent on claim 4, which is an aerofoil and the first and second regions are located at the suction side of the aerofoil.

9. The gas turbine engine vane as claimed in any one of claims 5 to 8, wherein the multi-part insert defines one or more flow channels which, in use, collect cooling air from one or both ends of the aerofoil and distribute the cooling air through the shell, at least a portion of the cooling air being distributed to the inlets of the first impingement holes for jetting onto the first region.

10. A method of providing the assembled multi-part insert within the shell of the gas turbine vane as claimed in claim 1, comprising:
providing the shell; and
providing a plurality of insert parts which are configured to be assembled in an abutting relation with one another within the front cavity to provide the multi-part insert;
wherein the assembled multi-part insert includes at least one retention part which engages with a divider wall of the cavity and at least the fore insert part so as to retain the assembled multi-part insert within the front cavity.

11. The method as claimed in claim 10, wherein at least one of the insert parts is a retention part which is oversized in relation to corresponding portion of the front cavity in which it is located in use, the oversize being sufficient to require elastic deformation of part during insertion into the cavity to provide the biasing force.

12. The method as claimed in claim 11, wherein the insert part has at least two members connected by a hinge portion, the method further comprising deforming the insert part so as to bring the two members closer together such that the hinge portion is elastically deformed prior to insertion.

13. The method as claimed in claim 10 or claim 11, wherein, prior to insertion of the retention part, the retention part is deformed so as to plastically deform a portion thereof.

## Patentansprüche

1. Gasturbinenmotorschaufel (100), umfassend
einen Keramikmatrixverbundstoffmantel (1000) und eine Trennwand (1004), welche den Mantel in eine vordere Kavität (1001) an einem Vorderkantenbereich der Schaufel und eine hintere Kavität (1003) an einem Hinterkantenbereich der Schaufel teilt, und wobei sich ein mehrteiliger Einsatz (1010) in der vorderen Kavität und ein zweiter mehrteiliger Einsatz in der hinteren Kavität befindet,
wobei der mehrteilige Einsatz mehrere separate Teile (1010a,b) umfasst, die aneinander anstoßendem Verhältnis in der Kavität zusammengebaut sind, um den mehrteiligen Einsatz bereitzustellen, wobei die mehreren separaten Teile separat in die Kavität eingeführt werden kann;
wobei der zusammengebaute mehrteilige Einsatz mindestens einen Rückhalteteil (1010b) aufweist und einen vorderen Einsatzteil (1010a), wobei der Rückhalteteil mit der Trennwand der Kavität und mindestens dem vorderen Einsatzteil eingreift, um den zusammengebauten mehrteiligen Einsatz in der Kavität zu halten;
wobei der vordere Einsatzteil der vorderen Kavität ein gekrümmtes Element aufweist, welches das Innere der Vorderkante der Schaufel abdichtend berührt und sich um die Ansaugseite in Richtung der Trennwand erstreckt, wobei der mindestens eine Rückhalteteil in Form einer Dichtungsplatte vorgesehen ist, die abdichtend an die Trennwand anstößt;
und wobei der Rückhalteteil so gestaltet ist, dass er einen Presssitz mit wenigstens dem vorderen Einsatzteil oder einer Wand der Kavität bereitstellt, und wobei der Rückhalteteil eine elastische Vorspannung bereitstellt, die so wirkt, dass sie den Rückhalteteil oder einen anderen Einsatzteil gegen eine oder mehrere Wände des Mantels drückt.

2. Gasturbinenmotorschaufel nach Anspruch 1, wobei der Rückhalteteil mindestens zwei durch einen Gelenkteil verbundene Elemente aufweist, wobei der Gelenkteil die Vorspannungskraft bereitstellt.

3. Gasturbinenmotorschaufel nach Anspruch 1 oder Anspruch 2, wobei die Kavität einen Einführungsteil (1050) aufweist, in den die Einsatzteile eingeführt werden, und einen Aufnahmeteil (1060), in dem sich wenigstens einer der Einsatzteile befindet, wenn der mehrteilige Einsatz zusammengebaut ist.

4. Gasturbinenmotorschaufel nach einem der vorstehenden Ansprüche, wobei der mehrteilige Einsatz folgendes aufweist:
eine erste Wand, die erste Aufpralllöcher aufweist, die im Einsatz Kühlluft auf einen ersten Bereich der inneren Oberfläche des Mantels strömen;
eine zweite Wand, die zweite Aufpralllöcher aufweist, die im Einsatz Kühlluft auf einen zweiten Bereich der inneren Oberfläche des Mantels strömen; und
einen Fluidpfad, der zwischen den beiden Wänden ausgebildet ist, wobei der Pfad die auf den ersten Bereich geströmte Kühlluft zu den Einlässen der zweiten Aufpralllöcher zum Strömen auf den zweiten Bereich zurückführt.

5. Gasturbinenmotorschaufel nach Anspruch 4, wobei der mehrteilige Einsatz an dem ersten und zweiten Bereich Wärmeübertragungsformationen aufweist, die den mehrteiligen Einsatz in dem Mantel stützen und welche die Kühlluft um die innere Oberfläche des Mantels leiten.

6. Gasturbinenmotorschaufel nach Anspruch 4 oder Anspruch 5, wobei der Mantel Außenfilmkühlöffnungen aufweist, die durch Kühlluft versorgt werden, die auf den zweiten Bereich der inneren Oberfläche geströmt worden ist.

7. Gasturbinenmotorschaufel nach einem der vorstehenden Ansprüche, wobei der mehrteilige Einsatz Tripstreifenformationen aufweist, die entlang der inneren Oberfläche des Mantels angeordnet sind.

8. Gasturbinenmotorschaufel nach einem der Ansprüche 4 bis 7 in Abhängigkeit von Anspruch 4, bei der es sich um ein Flügelprofil handelt, und wobei sich der erste und der zweite Bereich auf der Ansaugseite des Flügelprofils befinden.

9. Gasturbinenmotorschaufel nach einem der Ansprüche 5 bis 8, wobei der mehrteilige Einsatz eine oder mehrere Strömungskanäle definiert, die im Einsatz Kühlluft von einem oder beiden Enden des Flügelprofils sammeln und die Kühlluft durch den Mantel verteilen, wobei wenigstens ein Teil der Kühlluft zu den Einlässen der ersten Aufpralllöcher zum Strömen auf den ersten Bereich verteilt wird.

10. Verfahren zur Bereitstellung eines zusammengebauten mehrteiligen Einsatzes in dem Mantel der Gasturbinenschaufel nach Anspruch 1, umfassend:
Bereitstellen des Mantels; und
Bereitstellen einer Mehrzahl von Einsatzteilen, die für einen Zusammenbau in aneinander anstoßendem Verhältnis in der vorderen Kavität gestaltet sind, so dass der mehrteilige Einsatz bereitgestellt wird;
wobei der zusammengebaute mehrteilige Einsatz mindestens einen Rückhalteteil aufweist, der mit einer Trennwand der Kavität und mindestens dem vorderen Einsatzteil eingreift, um den zusammengebauten mehrteiligen Einsatz in der vorderen Kavität zu halten.

11. Verfahren nach Anspruch 10, wobei wenigstens einer der Einsatzteile ein Rückhalteteil ist, der im Verhältnis zu dem entsprechenden Teil der vorderen Kavität, in welcher er sich im Einsatz befindet, eine Übergröße aufweist, wobei die Übergröße ausreichend ist, so dass eine elastische Teilverformung während der Einführung in die Kavität erforderlich ist, um die Vorbelastungskraft bereitzustellen.

12. Verfahren nach Anspruch 11, wobei der Einsatzteil mindestens zwei durch einen Gelenkteil verbundene Elemente aufweist, wobei das Verfahren ferner das Verformen des Einsatzteils umfasst, um die beiden Elemente dicht zusammen zu führen, so dass der Gelenkteil vor dem Einführen elastisch verformt wird.

13. Verfahren nach Anspruch 10 oder Anspruch 11, wobei der Rückhalteteil vor dem Einführen des Rückhalteteils verformt wird, so dass ein Teil davon plastisch verformt wird.

## Revendications

1. Aube de turbine à gaz (100) comprenant
une coque composite à matrice céramique (1000), et une paroi de séparation (1004) qui sépare la coque en une cavité avant (1001) au niveau d'une région de bord d'attaque de l'aube, et une cavité arrière (1003) au niveau d'une région de bord de fuite de l'aube ; et un insert en plusieurs parties (1010) étant situé dans la cavité avant et un second insert en plusieurs parties étant situé dans la cavité arrière,
l'insert en plusieurs parties comprenant de multiples parties séparées (1010a,b) assemblées dans une relation de butée les unes avec les autres à l'intérieur de la cavité pour fournir l'insert en plusieurs parties, les multiples parties séparées pouvant être insérées séparément dans la cavité ;
l'insert en plusieurs parties assemblé comprenant au moins une partie de retenue (1010b) et une partie d'insert avant (1010a), la partie de retenue venant en prise avec la paroi de séparation de la cavité et au moins la partie d'insert avant de sorte à retenir l'insert en plusieurs parties assemblé à l'intérieur de la cavité ;
la partie d'insert avant de la cavité avant comprenant un élément incurvé qui est en contact étanche avec l'intérieur du bord d'attaque de l'aube et s'étend autour du côté aspiration vers la paroi de séparation, l'au moins une partie de retenue étant sous la forme d'une plaque d'étanchéité qui vient en butée étanche contre la paroi de séparation ;
et, la partie de retenue étant conçue pour fournir un ajustement serré avec au moins la partie d'insert avant et/ou une paroi de la cavité et la partie de retenue fournissant une sollicitation élastique qui agit pour pousser la partie de retenue ou une autre partie d'insert contre au moins une paroi de la coque.

2. Aube de turbine à gaz selon la revendication 1, la partie de retenue comprenant au moins deux éléments reliés par une partie charnière, la partie charnière fournissant la force de sollicitation.

3. Aube de turbine à gaz selon la revendication 1 ou 2, la cavité comprenant une partie d'insertion (1050) dans laquelle les parties d'insert sont insérées, et une partie de réception (1060) dans laquelle au moins une des parties d'insert est située lorsque l'insert en plusieurs parties est assemblé.

4. Aube de turbine à gaz selon l'une quelconque des revendications précédentes, l'insert en plusieurs parties comprenant :
une première paroi contenant des premiers trous d'impact qui, lors de l'utilisation, projettent de l'air de refroidissement sur une première région de la surface intérieure de la coque ;
une seconde paroi contenant des seconds trous d'impact qui, lors de l'utilisation, projettent de l'air de refroidissement sur une seconde région de la surface intérieure de la coque ; et
un cheminement de fluide formé entre les deux parois, le cheminement recyclant l'air de refroidissement projeté sur la première région vers les entrées des seconds trous d'impact pour le projeter sur la seconde région.

5. Aube de turbine à gaz selon la revendication 4, l'insert en plusieurs parties comprenant des formations de transfert de chaleur au niveau des première et seconde régions qui soutiennent l'insert en plusieurs parties à l'intérieur de la coque et qui guident l'air de refroidissement autour de la surface intérieure de la coque.

6. Aube de turbine à gaz selon la revendication 4 ou 5, la coque comprenant des trous de refroidissement de film extérieur alimentés par de l'air de refroidissement qui a été projeté sur la seconde région de la surface intérieure.

7. Aube de turbine à gaz selon l'une quelconque des revendications précédentes, l'insert en plusieurs parties comprenant des formations de bandes de déclenchement qui se trouvent le long de la surface intérieure de la coque.

8. Aube de turbine à gaz selon l'une quelconque des revendications 4 à 7, lorsqu'elle dépend selon la revendication 4, qui est une surface portante et les première et seconde régions étant situées au niveau du côté aspiration de la surface portante.

9. Aube de turbine à gaz selon l'une quelconque des revendications 5 à 8, l'insert en plusieurs parties définissant au moins un canal d'écoulement qui, lors de l'utilisation, collecte l'air de refroidissement provenant d'une ou des deux extrémités de la surface portante et distribue l'air de refroidissement à travers la coque, au moins une partie de l'air de refroidissement étant distribuée aux entrées des premiers trous d'impact pour être projetée sur la première région.

10. Procédé pour fournir l'insert en plusieurs parties assemblé à l'intérieur de la coque de l'aube de turbine à gaz selon la revendication 1, comprenant les étapes consistant à :
fournir la coque ; et
fournir une pluralité de parties d'insert qui sont conçues pour être assemblées dans une relation de butée les unes avec les autres dans la cavité avant pour fournir l'insert en plusieurs parties ;
l'insert en plusieurs parties assemblé comprenant au moins une partie de retenue qui vient en prise avec une paroi de séparation de la cavité et au moins la partie d'insert avant de sorte à retenir l'insert en plusieurs parties assemblé à l'intérieur de la cavité avant.

11. Procédé selon la revendication 10, au moins une des parties d'insert étant une partie de retenue qui est surdimensionnée par rapport à la partie correspondante de la cavité avant dans laquelle elle est située lors de l'utilisation, le surdimensionnement étant suffisant pour nécessiter une déformation élastique de la partie pendant l'insertion dans la cavité pour fournir la force de sollicitation.

12. Procédé selon la revendication 11, la partie d'insert ayant au moins deux éléments reliés par une partie charnière, le procédé comprenant en outre l'étape consistant à déformer la partie d'insert de sorte à rapprocher les deux éléments de sorte que la partie charnière soit déformée élastiquement avant l'insertion.

13. Procédé selon la revendication 10 ou 11, avant l'insertion de la partie de retenue, la partie de retenue étant déformée de sorte à déformer plastiquement une partie de celle-ci.
